# EUROPEAN PATENT APPLICATION

(11) **EP 4 611 088 A1**
(43) Date of publication of application: **03.09.2025**
(21) Application number: 25160037.5
(22) Date of filing: 25.02.2025
(51) Int. Cl.: H01M 10/04, H01M 10/0587, H01M 50/586, H01M 50/595

(54) **ELECTRODE ASSEMBLY FOR SECONDARY BATTERIES**

(30) Priority: 26.02.2024 KR 20240027162
(71) Applicant: SAMSUNG SDI CO., LTD., Yongin-si, Gyeonggi-do 17084 (KR)
(72) Inventor: No, Jae Hyun, 17084 Yongin-si, Gyeonggi-do (KR); Choi, Bum Kuk, 17084 Yongin-si, Gyeonggi-do (KR); Lee, Je Hyun, 17084 Yongin-si, Gyeonggi-do (KR); Kang, Jung Min, 17084 Yongin-si, Gyeonggi-do (KR); Song, Ho Jin, 17084 Yongin-si, Gyeonggi-do (KR); Kim, Ye Som, 17084 Yongin-si, Gyeonggi-do (KR); Kim, Seung Su, 17084 Yongin-si, Gyeonggi-do (KR); Kim, Ji Yun, 17084 Yongin-si, Gyeonggi-do (KR); Kang, Yun Jeong, 17084 Yongin-si, Gyeonggi-do (KR); Yeo, Dong Gyu, 17084 Yongin-si, Gyeonggi-do (KR)
(74) Representative: Michalski Hüttermann & Partner Patentanwälte mbB

(57) **Abstract**

Disclosed is an electrode assembly for secondary batteries, the electrode assembly including a first electrode plate having side A and side B on which a non-coated portion is formed at each of a first leading edge and a first trailing edge of both side-A and side-B and a positive electrode tab, a second electrode plate having side A and side B on which a non-coated portion is formed at each of a first leading edge and a first trailing edge of both side-A and side-B and a negative electrode tab, a separator interposed between the first electrode plate and the second electrode plate, a tab cover tape attached to each of the positive electrode tab and the negative electrode tab, a first insulating tape attached to the non-coated portion, and a second insulating tape attached to the non-coated portion.

## Description

### FIELD

Embodiments relate to an electrode assembly for secondary batteries with improved safety.

### BACKGROUND

In general, a secondary battery may include an electrode assembly in which a positive electrode plate and a negative electrode plate are laminated or wound in the state in which a separator is interposed therebetween, a case configured to receive the electrode assembly together with an electrolyte, and a cap assembly configured to seal the case.

In the electrode assembly, the separator may be damaged in a high temperature environment or for other reasons. If the separator is damaged, short circuit may occur between the positive electrode plate and the negative electrode plate and, in a severe case, the positive electrode plate and the negative electrode plate may ignite. A non-coated portion of the electrode plate at each of a leading edge and a trailing edge of the electrode assembly may have weak adhesion to the separator, which may increase the amount of shrinkage of the separator in a high temperature environment. During manufacture of the electrode assembly, the electrode plate may be cut to a predetermined length, and if a burr occurs on a cutting surface of the electrode plate, there may be a high risk of damage to the separator.

Therefore, it is desirable to prevent short circuit between the positive electrode plate and the negative electrode plate by blocking a current path caused by damage to the separator.

The information disclosed in this section is provided only for enhancement of understanding of the background of the present disclosure and therefore it may contain information that does not form the prior art.

### SUMMARY

Embodiments provide an electrode assembly for secondary batteries with improved safety.

An electrode assembly for secondary batteries according to some embodiments of the present disclosure includes a first electrode plate having side-A and side-B on which a non-coated portion is formed at each first leading edge of side-A and side-B of the first electrode plate, the first leading edges being an end at a winding center side, and at each first trailing edge of side-A and side-B of the first electrode plate, the trailing edges being an end opposite the first leading edge of side-A and side-B, and a positive electrode tab provided adjacent to the first leading edge of side-B and the first trailing edge of side-B, a second electrode plate having side-A and side-B on which a non-coated portion is formed at each second leading edge of side-A and side-B of the second electrode plate, the second leading edges being an end at a winding center side, and at each second trailing edge, the trailing edges being an end opposite the second leading edge, and a negative electrode tab provided adjacent to the second leading edge and the second trailing edge of side-B, a separator interposed between the first electrode plate and the second electrode plate, a tab cover tape attached to each of the positive electrode tab and the negative electrode tab, a first insulating tape attached to the non-coated portion so as to be adjacent to the first leading edge and the first trailing edge of each of side-A and side-B of the first electrode plate, and a second insulating tape attached to the non-coated portion so as to be adjacent to each of the first trailing edge of side-A and side-B of the first electrode plate, the second insulating tape being disposed between the first insulating tape and the tab cover tape.

In some embodiments, the first insulating tape attached to the first leading edges of side-A and side-B of the first electrode plate may be attached so as to cover the entirety of the non-coated portion excluding a part of the leading edge.

In some embodiments, the first insulating tape attached to the first leading edges of side-A and side-B of the first electrode plate may be attached so as to overlap a part of a positive electrode active material layer.

In some embodiments, the first insulating tape attached to the first trailing edges of side-A and side-B of the first electrode plate may be attached so as to overlap a part of the positive electrode active material layer.

In some embodiments, the first insulating tape may have a width greater than the width of the first electrode plate in a width direction perpendicular to a longitudinal direction of the first electrode plate.

In some embodiments, the second insulating tape may be attached so as to overlap a part of the first insulating tape.

In some embodiments, the second insulating tape may have a width equal to the width of the first electrode plate in the width direction perpendicular to the longitudinal direction of the first electrode plate.

In some embodiments, the first insulating tape attached to the first trailing edge of side-A of the first electrode plate may be attached so as to correspond to the position of the non-coated portion between the negative electrode active material layer on the second trailing edge of side-A of the second electrode plate and the tab cover tape of the negative electrode tab.

In some embodiments, the second insulating tape attached to the first trailing edge of side-A of the first electrode plate may be attached so as to correspond to the non-coated portion on side-A of the second electrode plate and the second trailing edge corresponding to the position of the negative electrode tab of the second electrode plate.

In some embodiments, the second insulating tape attached to the first trailing edge of side-B of the first electrode plate may be attached so as to correspond to the position of the non-coated portion on the second trailing edge between a negative electrode active material layer on side B of the second electrode plate and the tab cover tape of the negative electrode tab.

In some embodiments, the electrode assembly may further include a third insulating tape attached to the non-coated portion on each of the second leading edges of the second electrode plate.

In some embodiments, the third insulating tape may be disposed spaced apart from the negative electrode active material layer of the second electrode plate.

In some embodiments, the third insulating tape attached to side A of the second electrode plate may be attached so as to overlap a part of the tab cover tape of the negative electrode tab.

In some embodiments, the third insulating tape attached to side B of the second electrode plate may be attached so as to be spaced apart from the tab cover tape of the negative electrode tab and so as to be adjacent to the negative electrode active material layer.

In some embodiments, the third insulating tape may have a width substantially equal to the width of the second electrode plate in the width direction perpendicular to the longitudinal direction of the second electrode plate.

In some embodiments, the third insulating tape attached to side A of the second electrode plate may be disposed so as to correspond to the position of the positive electrode tab.

In some embodiments, the third insulating tape attached to side B of the second electrode plate may be disposed so as to correspond to the position of the first leading edge of the first electrode plate.

In some embodiments, side A of the first electrode plate and/or the second electrode plate may be a surface facing the center of winding during winding, and side B of the first electrode plate and/or the second electrode plate may be a surface facing outward during winding.

In some embodiments, side A is a surface facing a center of winding during winding, and side B is a surface facing outward during winding.

In some embodiments, the first and third insulating tapes may be made of the same insulating material having the same color.

In some embodiments, the first and third insulating tapes may be made of different insulating materials having different colors.

### BRIEF DESCRIPTION OF THE DRAWINGS

The accompanying drawings, which are incorporated in this specification, illustrate exemplary embodiments and serve to further illustrate the technical ideas of the present disclosure in conjunction with the detailed description of exemplary embodiments that follows, and the present disclosure is not to be construed as limited to what is shown in such drawings. In the drawings:
FIG. 1 is a sectional view schematically showing a winding state of an electrode assembly according to some embodiments of the present disclosure;
FIG. 2 is a plan view showing both sides of a positive electrode plate shown in FIG. 1, according to some embodiments;
FIGs. 3 and 4 are plan views showing a part of side A of the positive electrode plate shown in FIG. 2, according to some embodiments;
FIG. 5 is an enlarged plan view showing a part of a trailing edge of side A of the positive electrode plate shown in FIG. 4, according to some embodiments;
FIG. 6 is a plan view showing both sides of a negative electrode plate shown in FIG. 1, according to some embodiments;
FIGs. 7 and 8 are plan views showing a part of side A of the negative electrode plate shown in FIG. 6, according to some embodiments; and
FIG. 9 is a plan view showing a part of side B of the negative electrode plate shown in FIG. 6, according to some embodiments.

### DETAILED DESCRIPTION

Embodiments are provided to more fully illustrate the disclosure to a person having ordinary skill in the art, the following embodiments may be modified in various other forms, and the scope of the disclosure is not limited to the following embodiments. The embodiments are provided to make the disclosure more faithful and complete and to completely convey the idea of the disclosure fully to those skilled in the art.

In the following drawings, the thickness or size of each layer is exaggerated for convenience and clarity of description and the same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

Hereinafter, an electrode assembly for secondary batteries according to an embodiment of the present disclosure and a method of manufacturing the same will be described in detail with reference to the accompanying drawings.

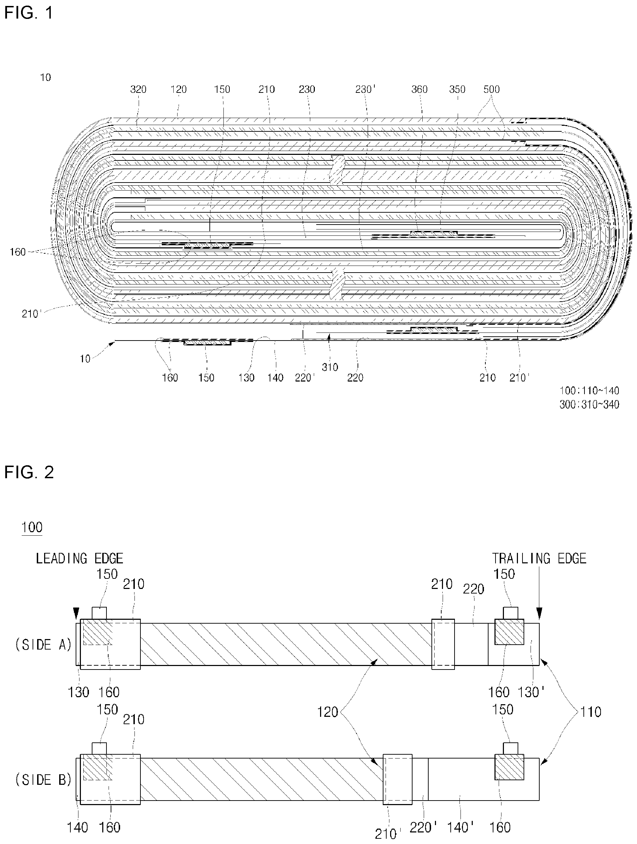

FIG. 1 is a sectional view schematically showing a wound state of an electrode assembly according to some embodiments of the present disclosure (only some of the winding turns are shown briefly).

In some embodiments, the electrode assembly, which is received in a cylindrical or pouch-shaped case, may be wound into a cylindrical or oval shape. During a winding process of the electrode assembly, a positive electrode plate, a negative electrode plate, and a separator interposed therebetween may be wound in a state of being laminated in a predetermined order. Generally, the structure in which the positive electrode plate, the negative electrode plate, and the separator are wound is referred to as an electrode assembly. The structure in which the positive electrode plate, the negative electrode plate, and the separator are laminated before winding may be referred to by a separate term, such as an electrode strip. However, this terminological distinction is only for convenience, and the term "electrode assembly" in the present disclosure may include all structures both before and after winding.

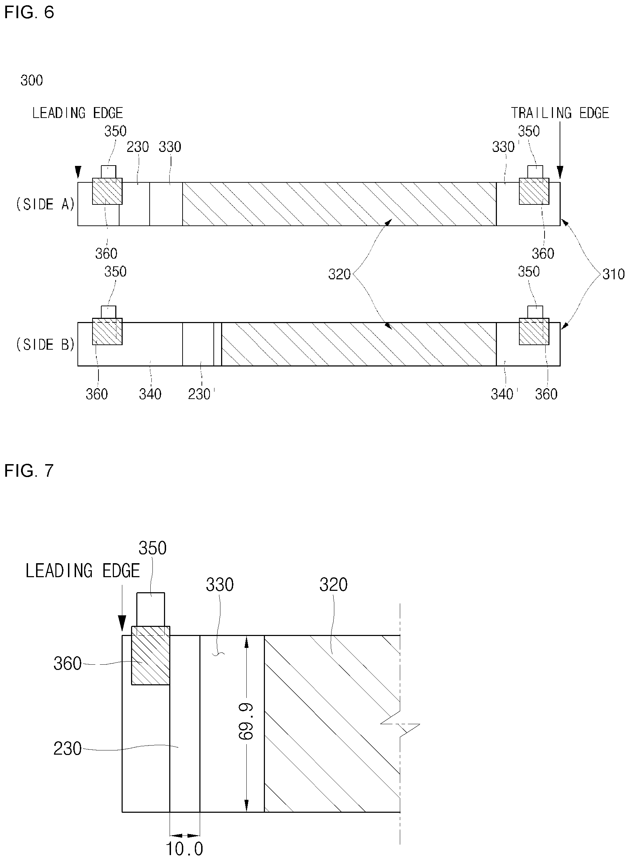

Referring to FIG. 1, the electrode assembly 10 according to the embodiment of the present disclosure may include a first electrode plate 100 (as shown in FIG. 2), a second electrode plate 300 (as shown in FIG. 6), and a separator 500. The first electrode plate 100, the second electrode plate 300, and the separator 500 may be wound in a state of being laminated (e.g., after lamination) in a predetermined order. Hereinafter, for convenience, the end facing the winding center is referred to as a leading edge (or leading end), and the end opposite the leading edge is referred to as a trailing edge (or trailing end). The inner surface facing the winding center during winding is referred to as side A, and the outer surface facing the outside is referred to as side B. In some embodiments, the leading edges and/or the trailing edges described herein may refer to a distal end portion of the first or second electrode plate, rather than the absolute end of the first or second electrode plate.

In some embodiments, the first electrode plate 100 may be a positive electrode plate. A positive electrode tab 150 may be provided adjacent to and/or proximate to each of the leading edge and the trailing edge of the first electrode plate 100. A tab cover tape 160 may be attached to the positive electrode tabs 150. Each of a first insulating tape 210 and a second insulating tape 220 may be provided at a part of a corresponding to the leading edge and/or the trailing edge of the first electrode plate 100.

In some embodiments, the second electrode plate 300 may be a negative electrode plate. A negative electrode tab 350 may be provided adjacent to each of the leading edge and the trailing edge of the second electrode plate 300. A tab cover tape 360 may be attached to the negative electrode tab 350. A third insulating tape 230 may be provided at a part of the leading edge of the second electrode plate 300.

The separator 500 may be disposed between the first electrode plate 100 and the second electrode plate 300 to prevent short circuit therebetween and to allow migration of lithium ions. The separator may be made of, but is not limited to, polyethylene, polypropylene, and/or a composite film of polyethylene and polypropylene. In some embodiments, the separator 500 may be disposed between the first electrode plate 100 and the second electrode plate 300 and/or on the inside of the second electrode plate 300 (e.g., on one or more surfaces of second electrode plates in contact with each other during winding).

The first insulating tape 210 and the second insulating tape 220 of the first electrode plate 100 may be configured to prevent short circuit with the non-coated portion of the second electrode plate 300 upon retraction of the separator 500 in the wound state. The third insulating tape 230 of the second electrode plate 300 may be configured to prevent short circuit between the non-coated portion of the second electrode plate 300 and the positive electrode tab 150 in the wound state.

The electrode plates and the insulating tapes will be described in more detail below.

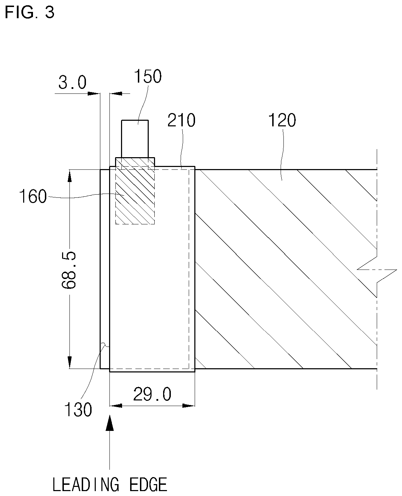

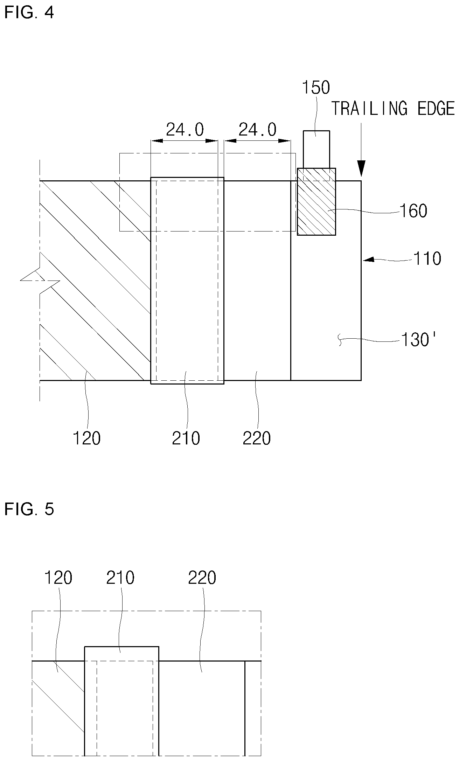

FIG. 2 is a plan view showing both sides of the positive electrode plate shown in FIG. 1. FIGs. 3 and 4 are plan views showing a part of side A of the positive electrode plate shown in FIG. 2. FIG. 5 is an enlarged plan view showing a part of the trailing edge of side A of the positive electrode plate shown in FIG. 4.

First, the first electrode plate 100 will be described with reference to FIGs. 2 to 5.

In some embodiments, the first electrode plate 100 may be a positive electrode plate. The first electrode plate 100 may include a positive electrode substrate 110 made of metal foil, such as aluminum and/or or an aluminum alloy, and/or a positive electrode active material layer 120, such as a transition metal oxide, provided on both sides of the positive electrode substrate 110. A compound capable of reversibly intercalating and deintercalating lithium (lithiated intercalation compound) may be used as the positive electrode active material. A complex oxide with a metal selected from among cobalt, manganese, nickel, and/or a combination thereof and lithium may be used. The complex oxide may be a lithium transition metal complex oxide, and examples thereof may include a lithium nickel-based oxide, a lithium cobalt-based oxide, a lithium manganese-based oxide, a lithium iron phosphate-based compound, a cobalt-free nickel-manganese-based oxide, and/or a combination thereof.

Referring to FIG. 2, the leading end and the trailing end of the first electrode plate 100 may be provided with positive electrode non-coated portions 130, 130', 140, and 140', which are regions not provided with the positive electrode active material layer 120. The positive electrode tab 150 may be provided at side B of each of the positive electrode non-coated portions 130, 130', 140, and 140'. A pair of positive electrode tabs 150 may be disposed so as to face and/or protrude from one side of the first electrode plate 100 in a longitudinal direction (e.g., a substantially perpendicular to the direction of the maximum dimension of the first electrode plate 100). A tab cover tape 160 configured to cover the positive electrode tab 150 may be attached to each of side B, on which the positive electrode tabs 150 are disposed, and side A, which is opposite side B. A pair of tab cover tapes 160 may be provided and may be attached to the positive electrode non-coated portions 130, 130', 140, and 140' on both sides. The size of the tab cover tape 160 may be greater than the size of a part of the positive electrode tab 150 attached to the positive electrode non-coated portions 140 and 140' and may thus cover a part of the positive electrode tab 150 protruding outwardly of the positive electrode non-coated portions 140 and 140'.

In some embodiments, the leading edge positive electrode non-coated portion of side A of the first electrode plate 100 (hereinafter, side-A leading edge positive electrode non-coated portion 130) may have a length equal to the length of the leading edge positive electrode non-coated portion of side B of the first electrode plate 100 (hereinafter, side-B leading edge positive electrode non-coated portion 140). The trailing edge positive electrode non-coated portion of side A of the first electrode plate 100 (hereinafter, side-A trailing edge positive electrode non-coated portion 130') may have a length less than the length of the trailing edge positive electrode non-coated portion of side B of the first electrode plate 100 (hereinafter, side-B trailing edge positive electrode non-coated portion 140'). The "length" of the non-coated portion is based on the longitudinal direction of the first electrode plate 100 (leftward-rightward direction in FIG. 2). The first insulating tape 210 may be attached to each of the side-A and side-B leading edge positive electrode non-coated portion 130 and 140 and the side-A and side-B trailing edge positive electrode non-coated portion 130' and 140' of the first electrode plate 100. The second insulating tape 220 may be attached between the first insulating tape 210 of the side-A trailing edge positive electrode non-coated portion 130' and the tab cover tape 160. The second insulating tape 220' may also be attached between the first insulating tape 210' of the side-B trailing edge positive electrode non-coated portion 140' and the tab cover tape 160. The insulating tape attached to the non-coated portion of the trailing edge may also be referred to as a "relamination tape." In the some embodiments, each of the first insulating tape 210 and/or the second insulating tape 220 may be a relamination tape.

The first insulating tape 210 may be a tape made of an insulating material that is attached to both sides of the first electrode plate 100. The first insulating tape 210 may be attached to each of the side-A and side-B leading edge positive electrode non-coated portions 130 and 140 and the side-A and side-B trailing edge positive electrode non-coated portions 130' and 140'. In some embodiments, a part of the first insulating tape 210 may be attached so as to overlap the positive electrode active material layer 120. An end of the positive electrode active material layer 120 in the longitudinal direction and a part of the first insulating tape 210 may be attached to each other so as to overlap each other. The first insulating tape 210 may be attached during the winding process of the electrode plate. The first insulating tape 210 may have a width greater than the width (e.g., a dimension in the upward-downward direction in FIG. 2) of the electrode plate to improve limit and/or reduce short circuiting and any safety risks associated with short circuiting.

Referring to FIGs. 2 and 3, the first insulating tape 210 attached to the side-A and side-B leading edge positive electrode non-coated portions 130 and 140 may have a width greater than the width of the first electrode plate 100. The first insulating tape 210 attached to the side-A and side-B leading edge positive electrode non-coated portions 130 and 140 may cover the remaining part excluding a part of the leading edge. Consequently, the tab cover tape 160 may also be completely covered by the first insulating tape 210.

The side-A leading end is described herein by way of example, according to certain embodiments. In some embodiments, the first electrode plate 100 has a width (e.g., a dimension in the upward-downward direction in FIG. 3) of 68.5 mm, and the first insulating tape 210 may have a width (e.g., a dimension in the upward-downward direction in FIG. 3) greater than the width of the first electrode plate. In some embodiments, the length of the first insulating tape 210 (e.g., a dimension in the leftward-rightward direction in FIG. 3 in the longitudinal direction of the first electrode plate) may be 29 mm. The remaining length (e.g., a dimension in the leftward-rightward direction in FIG. 3) of the positive electrode non-coated portion 130 that is exposed without being covered by the first insulating tape 210 may be 3 mm. In some embodiments, the remaining length (e.g., a dimension in the leftward-rightward direction in FIG. 3) of the positive electrode non-coated portion 130 that is exposed without being covered by the first insulating tape 210 has a minimum length of 2 mm and/or a maximum length of 5 mm. The length (e.g., a dimension in the leftward-rightward direction in FIG. 3) of the first insulating tape 210 may be selected within a range of 25 to 35 mm. The size of the non-coated portion may vary depending on the total height of the electrode assembly 10, and therefore the size of the first insulating tape 210 may vary. In some embodiments, the first insulating tape 210 may protrude outwardly of the first electrode plate 100 in the width direction (upward-downward direction in FIG. 3) by about 1 mm. The size and/or the disposition of the first insulating tape 210 on the side-A leading edge may be applied in an otherwise essentially identical manner to side B.

The side-A trailing end is described by way of example with reference to FIGs. 2, 4, and 5, according to certain embodiments. In some embodiments, the first insulating tape 210 may have a width (e.g., a dimension in the upward-downward direction in FIG. 4) greater than the width of the first electrode plate 100 (the width of the first electrode plate is the same as in FIG. 3). The length of the first insulating tape 210 (e.g., a dimension in the leftward-rightward direction in FIG. 4 in the longitudinal direction of the first electrode plate) may be 24 mm. The remaining length (e.g., a dimension in the leftward-rightward direction in FIG. 4) of the positive electrode non-coated portion 130' that is exposed without being covered by the first insulating tape 210 may be greater than the width of the first insulating tape 210. This is due to a larger length of the positive electrode non-coated portion 130' on the trailing edge than the positive electrode non-coated portion 130 on and/or proximate to the leading edge. The length (e.g., a dimension in the leftward-rightward direction in FIG. 4) of the first insulating tape 210 may be selected within a range of 17 to 27 mm. The first insulating tape 210 on and/or proximate to the trailing edge may correspond to the position of the negative electrode non-coated portion 330' between the negative electrode active material layer 320 on the side-A trailing edge of the second electrode plate 300 and the tab cover tape 360. The negative electrode non-coated portion 330' on and/or proximate to the trailing edge of the second electrode plate 300 may be covered by the first insulating tape 210 (see FIG. 1). The size of the non-coated portion may vary depending on the total height of the electrode assembly 10, and therefore the size of the first insulating tape 210 may vary. In some embodiments, the first insulating tape 210 may protrude outwardly of the first electrode plate 100 in the upward-downward direction (upward-downward direction in FIG. 4) by about 1 mm. The size and disposition of the first insulating tape 210 on the side-A trailing edge may be applied in an otherwise essentially identical manner to side B. The first insulating tape 210 on the side-B trailing edge may correspond to the position of the negative electrode non-coated portion 340' (as shown in FIG. 6) between the negative electrode active material layer 320 on the side-B trailing edge of the second electrode plate 300 and the tab cover tape 360. In some embodiments, the sizes of the side-A trailing edge positive electrode non-coated portion 130' and the side-B trailing edge positive electrode non-coated portion 140' are different from each other, and accordingly, the positions of the first insulating tape 210 on side A and side B may be different from each other.

Referring to FIGs. 2, 4, and 5, the second insulating tape 220 may be further attached to both sides of the trailing edge of the first electrode plate 100. The second insulating tape 220 may be a tape made of an insulating material that is attached to both sides of the first electrode plate 100. The second insulating tape 220 may be attached to the side-A and side-B trailing edge positive electrode non-coated portions 130' and 140'. In some embodiments, a part of the second insulating tape 220 may be attached so as to overlap the first insulating tape 210. An end of the first insulating tape 210 in the longitudinal direction of the first electrode plate 100 and an end of the second insulating tape 220 may be attached to each other so as to overlap each other. The second insulating tape 220 may be attached during the manufacturing process of the electrode plate. The first insulating tape 210 may have a width greater than the width (e.g., a dimension in a upward-downward direction in FIG. 2) of the electrode plate to improve safety against short circuit. In some embodiments, the second insulating tape 220 may have a width equal or substantially identical to the width (e.g., a dimension in the upward-downward direction in FIG. 2) of the electrode plate. Consequently, the first insulating tape 210 may protrude outwardly from the first electrode plate 100, whereas the second insulating tape 220 may not protrude. In some embodiments, the length (e.g., a dimension in the leftward-rightward direction in FIG. 4) of the second insulating tape 220 may be 24 mm (if the first electrode plate has a width of 68.5 mm in the upward-downward direction in FIG. 3). The width of the first insulating tape 210 may vary depending on the total height of the electrode assembly 10, whereas the width of the second insulating tape 220 may be fixed. The second insulating tape 220, which is attached to side A, may be disposed so as to correspond to side A corresponding to the position of the negative electrode tab 350 of the second electrode plate 300 (because the negative electrode tab is attached to side B) and the position of the trailing edge of the negative electrode non-coated portion 330'. The second insulating tape 220, which is attached to side B, may be disposed to correspond to the position of the non-coated portion between the side-B negative electrode active material layer 320 of the second electrode plate 300 and the tab cover tape 360. In some embodiments, the sizes of the second insulating tape 220 attached to side A and side B may be the same to or different from each other.

In some embodiments, the first insulating tape 210 and the second insulating tape 220 may not be provided as a single piece, because wrinkles are likely to be generated if the size of the insulating tape is too large. For an insulating tape that is attached to the outermost side of the electrode assembly 10, it may not be practical for commercial applications to unconditionally increase the size of the insulating tape because the appearance of a final cell is determined to be defective if wrinkles are generated. The first insulating tape 210 should be designed to be larger than the electrode plate to improve safety. However, because the first insulating tape 210 is exposed to the outside of the electrode assembly 10, there may be a problem of foreign matter sticking to the adhesive layer of the tape. Therefore, making a single piece of the first insulating tape 210 larger to function in place of the second insulating tape 220 may not be significantly advantageous. Therefore, it may be possible to overcome the above disadvantages by providing a second insulating tape 220 having a smaller size than the first insulating tape 210 so as to perform an insulating function if the separator 500 is reduced in size.

Next, the second electrode plate 300 will be described with reference to FIGs. 6 to 9.

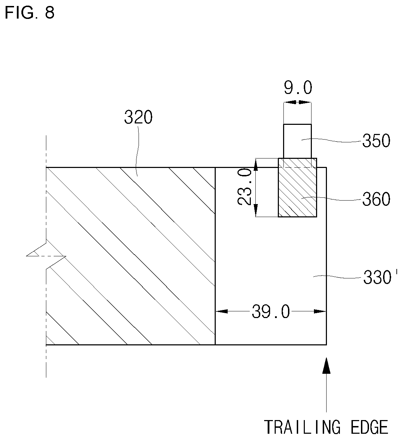

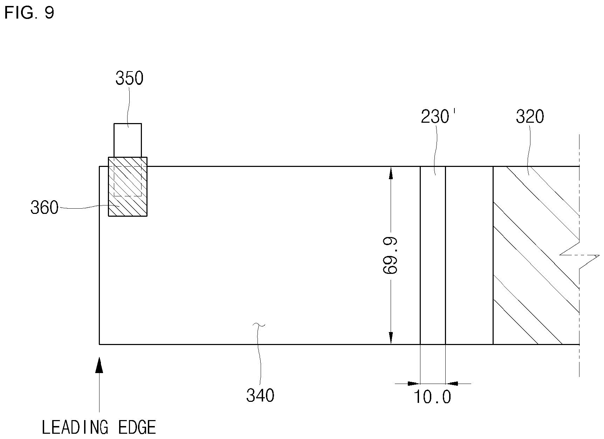

FIG. 6 is a plan view showing both sides of the negative electrode plate shown in FIG. 1. FIGs. 7 and 8 are plan views showing a part of side A of the negative electrode plate shown in FIG. 6. FIG. 9 is a plan view showing a part of side B of the negative electrode plate shown in FIG. 6.

Referring to FIG. 6, in some embodiments, the second electrode plate 300 may be a negative electrode plate. The second electrode plate 300 may include a negative electrode substrate 310 made of metal foil such as copper, a copper alloy, nickel, and/or a nickel alloy, and a negative electrode active material layer 320, such as graphite and/or carbon, provided on both sides of the negative electrode substrate 310. In some embodiments, the second electrode plate 300 may have an upward-downward width of 69.9 mm in FIG. 6 (also shown in FIG. 7), which may be greater than the width of the first electrode plate 100. The negative electrode active material may include a material capable of reversibly intercalating/deintercalating lithium ions, lithium metal, a lithium metal alloy, a material capable of being doped and de-doped with lithium, and/or a transition metal oxide. The material capable of reversibly intercalating/deintercalating lithium ions may be a carbon-based negative electrode active material, which may include, for example, crystalline carbon, amorphous carbon, and/or a combination thereof. Examples of crystalline carbon may include graphite, such as natural graphite or artificial graphite, and examples of amorphous carbon may include soft carbon, hard carbon, mesophase pitch carbide, or calcined coke. A Si-based negative electrode active material or a Sn-based negative electrode active material may be used, in some embodiments, with the material capable of being doped and de-doped with lithium. The Si-based negative electrode active material may be silicon, a silicon-carbon composite, SiOx (0 < x < 2), a Si-based alloy, and/or a combination thereof. The silicon-carbon composite may be a composite of silicon and amorphous carbon. According to some embodiments, the silicon-carbon composite may be in the form of silicon particles and amorphous carbon coated on surfaces of the silicon particles. The silicon-carbon composite may further include crystalline carbon. For example, the silicon-carbon composite may include a core including crystalline carbon and silicon particles and an amorphous carbon coating layer located on the surface of the core.

The leading end and the trailing end of the second electrode plate 300 may be provided with negative electrode non-coated portions 330, 330', 340, and 340', which are regions not provided with the negative electrode active material layer 320. The negative electrode tab 350 may be provided at side B of the negative electrode non-coated portions 340 and 340'. A pair of negative electrode tabs 350 may be disposed so as to face and/or protrude from one side of the second electrode plate 300 in a longitudinal direction (e.g., a substantially perpendicular to the direction of the maximum dimension of the second electrode plate 300). A tab cover tape 360 configured to cover the negative electrode tab 350 may be attached to each of side B, on which the negative electrode tabs 350 are disposed, and side A, which is opposite side B. A pair of tab cover tapes 360 may be provided and may be attached to the negative electrode non-coated portions 330, 330', 340, and 340' on both sides. The size of the tab cover tape 360 may be greater than the size of a part of the negative electrode tab 350 attached to the negative electrode non-coated portions 340 and 340' and may thus cover a part of the negative electrode tab 350 protruding outwardly of the negative electrode non-coated portions 340 and 340'.

In some embodiments, the leading edge negative electrode non-coated portion of side A of the second electrode plate 300 (hereinafter, side-A leading edge negative electrode non-coated portion 330) may have a length less than the length of the leading edge negative electrode non-coated portion of side B of the first electrode plate 100 (hereinafter, side-B leading edge negative electrode non-coated portion 340). The trailing edge negative electrode non-coated portion of side A of the second electrode plate 300 (hereinafter, side-A trailing edge negative electrode non-coated portion 330') may have a length equal to the length of the trailing edge negative electrode non-coated portion of side B of the second electrode plate 300 (hereinafter, side-B trailing edge negative electrode non-coated portion 340'). The "length" of the non-coated portion is based on the longitudinal direction of the second electrode plate 300 (e.g., a dimension in the leftward-rightward direction in FIG. 6). The third insulating tape 230 may be attached to each of the side-A leading edge negative electrode non-coated portion 330 and the side-B leading edge negative electrode non-coated portion 340 of the second electrode plate 300.

Referring to FIGs. 6 to 9, the third insulating tape 230 may be a tape made of an insulating material that is attached to both sides of the second electrode plate 300. The third insulating tape 230 may be attached to each of the side-A and side-B leading edge negative electrode non-coated portions 130 and 140. The third insulating tape 230 attached to side A may be attached so as to overlap a part of the tab cover tape 360. Consequently, the third insulating tape 230 attached to side A may be disposed spaced apart from the negative electrode active material layer 320. The third insulating tape 230 attached to side B may be attached so as to be spaced apart from the tab cover tape 360 and so as to be adjacent to the negative electrode active material layer 320. The third insulating tape 230 attached to side B may be disposed spaced apart from the negative electrode active material layer 320 by a predetermined distance. The third insulating tape 230 may be attached during the manufacturing process of the electrode plate. The third insulating tape 230 may have a width equal to the width (e.g., a dimension in the upward-downward direction in FIG. 7) of the electrode plate. In some embodiments, the length (e.g., a dimension in the leftward-rightward direction in FIG. 7) of the third insulating tape 230 may be 10 mm. In some embodiments, the second electrode plate 300 has a width of 69.9 (e.g., see FIG. 7) and the third insulating tape 230 has a length of 10 mm. The third insulating tape 230 on side A may be disposed so as to correspond to the position of the positive electrode tab 150. Consequently, the width of the third insulating tape 230 on side A may vary depending on the distance between the positive electrode tab 150 and the negative electrode tab 350.

Referring to FIG. 9, the third insulating tape 230 attached to side B may be disposed so as to correspond to the end position of the side-A positive electrode non-coated portion 130 exposed on and/or proximate to the leading edge of the first electrode plate 100. Consequently, the attachment position, width, and/or length of the third insulating tape 230 attached to side B may vary depending on the end position of the positive electrode non-coated portion 130.

Referring to FIG. 8, the width of the side-A trailing edge negative electrode non-coated portion 330' may be 39 mm. In some embodiments, the length (a dimension in the leftward-rightward direction in FIG. 8) of the negative electrode tab 350 disposed spaced apart from the trailing edge by a predetermined distance may be 9 mm. The second insulating tape 220 may be attached to the side-A trailing edge of the first electrode plate 100 so as to correspond to the negative electrode tab 350 and the position of the trailing edge of the negative electrode non-coated portion 330'. Although the negative electrode tab 350 is covered by the tab cover tape 360, the trailing edge negative electrode non-coated portion 330' other than the covered region may be exposed without being insulated. Therefore, the second insulating tape 220 may be provided so as to perform an insulating function if the separator 500 is shrunk.

Because the first insulating tape 210, the second insulating tape 220, and the third insulating tape 230 are attached during different processes, the insulating tapes may all be made of the same material so as to have the same color. However, for convenience, the insulating tapes may be formed so as to have different colors.

In the above structure, the leading edge and trailing edge regions of the positive electrode plate and the negative electrode plate, which may come into contact with each other if the separator shrinks, may be insulated to prevent short circuit under such shrinkage. Consequently, an instantaneous overcurrent path due to energization of the positive and negative electrode plates may be blocked, thereby preventing ignition.

As is apparent from the above description, in some embodiments of the present disclosure, it is possible to insulate leading edge and trailing edge regions of a positive electrode plate and a negative electrode plate, which may come into contact with each other upon shrinkage of a separator, thereby preventing short circuit due to shrinkage of the separator. Consequently, it is possible to block an instantaneous overcurrent path due to energization of the positive and negative electrode plates, thereby preventing ignition.

While the above describes embodiments for implementing a secondary battery according to the disclosure, the disclosure is not intended to be so limited to the described embodiments. Various modifications can be made by anyone having ordinary skill in the art to which the disclosure pertains without departing from the gist of the disclosure as claimed in the following claims, and such modifications should be considered as part of this disclosure.

## Claims

1. An electrode assembly (10) for secondary batteries, the electrode assembly (10) comprising:
A first electrode plate (100) having side-A and side-B, wherein a non-coated portion (130, 140) is formed at each first leading edge of side-A and side-B of the first electrode plate (100), the first leading edges being an end at a winding center side, , wherein a non-coated portion (130', 140') is formed at each first trailing edge of side-A and side-B of the first electrode plate (100), the first trailing edges being an end opposite the first leading edges, and wherein a positive electrode tab (150) is each provided proximate to the first leading edge of side-B and the first trailing edge of side B;
a second electrode plate (300) having side-A and side-B, wherein a non-coated portion (330, 340) is formed at each second leading edge of side-A and side-B of the second electrode plate (300), the second leading edges being an end at a winding center side, wherein a non-coated portion (330', 340') is formed at each second trailing edge of side-A and side-B of the second electrode plate (300), the second trailing edges being an end opposite the second leading edges, and wherein a negative electrode tab (350) is each provided proximate to the second leading edge of side-B and the second trailing edge of side-B;
a separator (500) interposed between the first electrode plate (100) and the second electrode plate (300);
a tab cover tape (160, 360) attached to each of the positive electrode tab (150) and the negative electrode tab (350);
a first insulating tape (210, 210') attached to the non-coated portion (130, 130', 140, 140') so as to be adjacent to the first leading edge and the first trailing edge of each of side-A and side-B of the first electrode plate (100); and
a second insulating tape (220, 220') attached to the non-coated portion so as to be adjacent to each of the first trailing edge of side-A and side-B of the first electrode plate (100), the second insulating tape (220, 220') being disposed between the first insulating tape (210, 210') and the tab cover tape (160).

2. The electrode assembly (10) as claimed in claim 1, wherein the first insulating tape (210, 210') attached to the first leading edges of side-A and side-B of the first electrode plate (100) is attached so as to cover the entirety of the non-coated portion (130, 140) excluding a part of the leading edge.

3. The electrode assembly (10) according to claims 1 or 2, wherein the first insulating tape (210, 210') attached to the first leading edges of side-A and side-B of the first electrode plate (100) is attached so as to overlap a part of a positive electrode active material layer (120).

4. The electrode assembly (10) according to any of the previous claims, wherein the first insulating tape (210, 210') attached to the first trailing edges of side-A and side-B of the first electrode plate (100) is attached so as to overlap a part of the positive electrode active material layer (120).

5. The electrode assembly (10) according to any of the previous claims, wherein the first insulating tape (210, 210') has a width greater than a width of the first electrode plate (100) in a width direction perpendicular to a longitudinal direction of the first electrode plate (100); and/or wherein the second insulating tape (220, 220') has a width equal to a width of the first electrode plate (100) in a width direction perpendicular to a longitudinal direction of the first electrode plate (100).

6. The electrode assembly (10) according to any of the previous claims, wherein the second insulating tape (220, 220') is attached so as to overlap a part of the first insulating tape (210, 210'); or wherein the first insulating tape (210, 210') is attached so as to overlap a part of the second insulating tape (220, 220').

7. The electrode assembly (10) according to any of the previous claims, wherein the first insulating tape (210) attached to the first trailing edge of side-A of the first electrode plate (100) is attached so as to correspond to a position of the non-coated portion (330') between the negative electrode active material layer (320) on the second trailing edge of side-A of the second electrode plate (300) and the tab cover tape (360) of the negative electrode tab (350), and/or wherein the second insulating tape (220) attached to the first trailing edge of side-B of the first electrode plate (100) is attached so as to correspond to a position of the non-coated portion (340') on the second trailing edge between the negative electrode active material layer (320) on side B of the second electrode plate (300) and the tab cover tape (360) of the negative electrode tab (350).

8. The electrode assembly (10) as claimed in claim 7, wherein the second insulating tape (220) attached to the first trailing edge of side-A of the first electrode plate (100) is attached so as to correspond to the non-coated portion (330') on side-A of the second electrode plate (300) and the second trailing edge corresponding to a position of the negative electrode tab (350) of the second electrode plate (300).

9. The electrode assembly (10) according to any of the previous claims, further comprising a third insulating tape (230) attached to the non-coated portion (330, 340) on each of the second leading edges of side-A and side-B of the second electrode plate (300).

10. The electrode assembly (10) as claimed in claim 9, wherein the third insulating tape (230) is disposed spaced apart from the negative electrode active material layer (320) of the second electrode plate (300) and/or wherein the third insulating tape (230) attached to side-A of the second electrode plate (300) is attached so as to overlap a part of the tab cover tape (360) of the negative electrode tab (350).

11. The electrode assembly (10) according to any of claims 9 or 10, wherein the third insulating tape (230) attached to side B of the second electrode plate (300) is attached so as to be spaced apart from the tab cover tape (360) of the negative electrode tab (350) and so as to be adjacent to the negative electrode active material layer (320), and/or wherein the third insulating tape (230) has a width substantially equal to a width of the second electrode plate (200) in a width direction perpendicular to a longitudinal direction of the second electrode plate (200).

12. The electrode assembly (10) according to any of claims 9 to 11, wherein the third insulating tape (230) attached to side A of the second electrode plate (300) is disposed so as to correspond to a position of the positive electrode tab (150), and/or wherein the third insulating tape (230) attached to side B of the second electrode plate (300) is disposed so as to correspond to a position of the first leading edge of the first electrode plate (100).

13. The electrode assembly (10) according to any of the previous claims, wherein side A of the first electrode plate (100) and/or the second electrode plate (200) is a surface facing a center of winding during winding, and side B of the first electrode plate (100) and/or the second electrode plate (200) is a surface facing outward during winding.

14. The electrode assembly (10) according to any of claims 9 to 12, wherein the first insulating tape (210, 210') and the third insulating tape (230) are made of the same insulating material having the same color.

15. The electrode assembly (10) according to any of claims 9 to 12 , wherein the first insulating tape (210, 210') and the third insulating tape (230) are made of different insulating materials having different colors.
